## Europäisches Patentamt

## European Patent Office

## Office européen des brevets

(19)

(11) Veröffentlichungsnummer: **0 294 334**
**A1**

## EUROPÄISCHE PATENTANMELDUNG

(12)

(21) Anmeldenummer: **88810349.6**

(22) Anmeldetag: **30.05.88**

(51) Int. Cl.⁴: **G 01 N 27/22**

(30) Priorität: **04.06.87 DE 8707954**

(43) Veröffentlichungstag der Anmeldung:
**07.12.88 Patentblatt 88/49**

(84) Benannte Vertragsstaaten:
**AT BE CH DE ES FR GB GR IT LI LU NL SE**

(71) Anmelder: **Kohler, Hans-Michael**
**Kappelergasse 16**
**CH-8022 Zürich (CH)**

(72) Erfinder: **Kohler, Hans-Michael**
**Kappelergasse 16**
**CH-8022 Zürich (CH)**

(74) Vertreter: **Groner, Manfred et al**
**Patentanwalts-Bureau Isler AG Walchestrasse 23**
**CH-8006 Zürich (CH)**

(54) **Kapazitiver Messwertaufnehmer.**

(57) Ein Messkondensator weist eine hülsenförmige Aussenelektrode (2) und eine Innenelektrode (1) in der Form eines zentrischen Bolzens auf. Der das Dielektrikum bildende Raum zwischen den Elektroden (1, 2) ist offen, so dass die Messatmosphäre in diesen Raum eindiffundieren kann. Die Elektroden (1, 2) werden durch starke Schichten aus Feingold mit blanken Oberflächen (50, 60) gebildet. Die Elektroden (1.2) sind mittels einer Guardbuchse (3, 4, 5) fest miteinander verbunden und gegeneinander isoliert. Das Verhältnis zwischen dem Volumen des Dielektrikums und der Oberfläche der Elektroden (1, 2) beträgt wenigstens je 1 mm² Oberfläche ein Volumen von 0,1 mm³. Oberflächenstrukturen mit einer in einer Dimension geringeren Abmessung als 0,01 mm werden hierbei nicht berücksichtigt. Die Messung beruht vorwiegend auf den originären, vom gasförmigen Dielektrikum verursachten Messeffekten, während die parasitären, von den Vorgängen an den Oberflächen der Elektroden (1, 2) herrührenden Effekte einen vergleichsweise kleinen Anteil an den Veränderungen des Dielektrikums haben.

Fig. 1

EP 0 294 334 A1

**Beschreibung**

## Kapazitiver Messwertaufnehmer

Die Erfindung betrifft einen kapazitiven Messwertaufnehmer nach dem Oberbegriff des Anspruchs 1. Solche Messwertaufnehmer werden beispielsweise bei Emissionsüberwachungen zur Ermittlung des Feuchtegehalts eingesetzt, da nur die genaue Kenntnis des Feuchtegehalts eines emittierten Gasstroms die mengenmässig genaue Ermittlung der enthaltenen Schadstoffe, beispielsweise $SO_2$, HCl, $NO_x$, gestattet. Solche Emissionsüberwachungen sind in zunehmendem Masse gesetzlich vorgeschrieben, beispielsweise bei thermischen Kraftwerken mit fossilen Brennstoffen.

Im Stand der Technik sind durch die DE-PS 16 98 096 und die DE-PS 23 65 826 kapazitive Feuchigkeitsfühler bekanntgeworden, bei denen ein Kondensator mit einem hygroskopischen Dielektrikum, beispielsweise aus $Al_2O_3$, als Messwert aufnehmer eingesetzt wird. Dieses Dielektrikum ändert seine elektrischen Eigenschaften in ausreichend reproduzierbarer Abhängigkeit von den herrschenden Feuchteverhältnissen. Da das genannte hygroskopische Dielektrikum in möglichst engem Kontakt mit dem Prozessmedium stehen muss, damit ein schneller Feuchteaustausch möglich ist, ist es auch Angriffen des Prozessmediums ausgesetzt. Während in der Spurenoder Klimafeuchte die Prozessatmosphären grösstenteils sehr sauber und allenfalls mässig, meist nicht über 50° C, erwärmt sind, sind diejenigen der Hochfeuchte heiss, staubbeladen und meist mit chemisch agressiven gasförmigen Säure- und Lösungsmittelrückständen verunreinigt. Die genannten Feuchtigkeitsfühler eignen sich unter diesen Einsatzbedingungen nicht und führen zu unbefriedigenden Ergebnissen.

Im VDI-Bericht Nr. 509, 1984, Seiten 271 ff, wurde ein Messwertaufnehmer mit direkter dielektrischer Feuchtemessung in der Gasphase vorgeschlagen. Um die Korrosion der Elektroden durch die Prozessatomosphäre auszuschliessen,werden diese mit einem inerten Werkstoff, beispielsweise mit einem Ueberzug aus Glas oder PTFE (auf Keramik) abgedeckt. Bei diesem Messwertaufnehmer besteht die Schwierigkeit, dass es an der Oberfläche des Glas bzw. PTFE Ueberzugs zu starken Konzentrationen von Wassermolekülen kommt, die teilweise mit dem Glas oder mit dort ebenfalls abgelagerten Verunreinigungen reagieren und damit einen parasitären dielektrischen Effekt erzeugen, der erheblich grösser ist als der von den gasförmigen Wassermolekülen im freien Raum zwischen den Messelektroden erzeugte eigentliche Messeffekt. Ausserdem ist die als Referenzdielektrikum eingesetzte $Al_2O_3$-Keramik temperatur-zyklisch und in der Alterung nicht annähernd ausreichend stabil, um als Nullpunkt für die Messung geeignet zu sein. Beide Schwierigkeiten führen zu Nullpunkt- und Gaindriften, die eine reproduzierbare Messung über einen längeren Zeitraum nicht gestatten.

Weiter ist durch die DE-OS 35 05 203 ein offener Messkondensator bekanntgeworden, bei welchem die Kondensatorelektroden vollständig in freistehenden Hülsen aus einem gebrannten, keramischen Werkstoff stecken. Auch hier wird auf die Bedeutung der Beschichtung der felderregenden Elektroden verwiesen. Die Schwierigkeit der Nullpunkt- und Gaindriften bestehen auch bei diesem Messkondensator.

Da die Konzentration der Wassermoleküle an der Grenzfläche der Beschichtung nicht von der absoluten Konzentration des gasförmigen Wassers im Messgas, sondern von dessen Nähe zur Sättigungstemperatur abhängig ist, zeigen solche Messwertaufnehmer ausgeprägte rF(Relativfeuchte)-Effekte, die eine zuverlässige Messung der absoluten Konzentration verhindern. Durch Alterungsvorgänge tritt ausserdem eine Veränderung an der Oberfläche des Beschichtungsmaterials ein, durch die der oben beschriebene rF-Effekt zunimmt. Deshalb kann dieser Effekt nicht durch Temperatur-Korrelation kompensiert werden.

Auch bei dem kapazitiven Messfühler nach der DE-PS 35 13 583 ist eine Messelektrode mittels einer Isolationsschicht gegen den Messraum elektrisch isoliert. Vorgeschlagen wird hier auch, die Elektroden mit einem reaktiven Ueberzug zu versehen.

Der Erfindung liegt die Aufgabe zugrunde, einen kapazitiven Messwertaufnehmer der genannten Art zu schaffen, welcher die genannten Schwierigkeiten vermeidet. Der Messwertaufnehmer soll in den unterschiedlichsten Bereichen der Industrie eingesetzt werden können und auch im jahrelangen Dauereinsatz weitgehend ohne Wartung zufriedenstellende Messwerte liefern.

Diese Aufgabe wird durch die Erfindung gemäss Anspruch 1 gelöst. Beim erfindungsgemässen Messwertaufnehmer haben die originären, vom gasförmigen Dielektrikum verursachten Messeffekte einen wesentlich grösseren Anteil an den Veränderungen des Dielektrikums des Messkondensators als die parasitären, von den Vorgängen an den Oberflächen herrührenden Effekten. Im Unterschied zum Stand der Technik sind die Elektroden nicht passiviert, sondern im Gegenteil mit einer blanken, vorzugsweise metallisch blanken Oberfläche ausgebildet. Die Oberflächen der Elektroden können auch mit isolierendem Material beschichtet sein, vorausgesetzt die Beschichtung ist sehr dünn, so dass die parasitären Effekte vernachlässigt werden können. Der Einfluss der parasitären Effekte kann gegebenenfalls durch ein hohes Volumen/Flächen-Verhältnis vermindert werden. Die Elektroden können aus Titan ausgeführt werden. Dabei ist bei einem V/A-verhältnis von 3.75 $mm^3/mm^2$ die Ausbildung einer Oxidschicht von 300 - 700 Angström unkritisch, wenn der Messbereich nicht kleiner als mindestens 100 g $H_2O/m^3$ ist. Wesentlich für die Bewertung der Schichtstärke ist das elektrisch-chemische Verhalten der Beschichtung: Während die aus dem Stand der Technik bekannten Messwertaufnehmer die Wasseraufnahme der Schicht oder eine chemische Reaktion zwischen Wasserdampf und Beschichtung als den wesentlichen Anteil des Messeffektes ausnützen, ist die erfindungsgemässe Anordnung auf elektrisch-chemisch neutrale Beschichtung angewiesen. Als elektrisch-chemisch neutral wird eine Beschichtung bezeichnet, die einen vernachlässigbaren Beitrag zum Mess-Signal liefert. Zu beachten ist, dass eine Beschichtung der Elektroden in der physikalischen Wirkung einer Vervielfachung der Oberfläche entspricht. Für den Fachmann ist jedoch klar, dass extrem dünne Isolationsschichten an den Elektroden möglich sind, die im Gegensatz zu den bekannten Beschichtungen lediglich kleine und zu vernachlässigende parasitäre Oberflächeneffekte zeigen. Die Elektroden sind masslich so ausgebildet, dass ein möglichst grosses Verhältnis von Messkondensatorvolumen zu Elektrodenoberfläche besteht. Die aktive Oberfläche wird für diese Ueberlegung als das 2-fache der Oberfläche der Elektrode mit der kleinen Oberfläche angenommen.

Nach einer Weiterbildung des Erfindungsgegenstands sind die Elektroden mit einer Edelmetallschicht geschützt. Feingold beispielsweise ist auch an der blanken Oberfläche chemisch weitgehend inert und weist auch keine Oxidschicht auf, in welcher parasitäre Effekte ablaufen können.

Die Weiterbildung nach Anspruch 3 hat zudem den Vorteil, dass Streufelder abgeschirmt werden.

Vorteilhafte Ausbildungen der Messelektrode ergeben sich aus den Ansprüchen 3 und 4.

Um eine konstante Nullkapazität aufzuweisen ist es vorteilhaft, die Elektroden mechanisch fest gegeneinander zu montieren. Um den Messkondensator nicht ohmisch kurzzuschliessen, muss hierfür ein isolierender Werkstoff verwendet werden. Geschieht dies ohne besondere Vorkehrungen, so wird wegen der gegenüber Gasen hohen Dielektrizität von isolierenden Werkstoffen der wesentliche Teil der Kapazität des Messkondensators durch diesen Isolator verursacht. Die temperatur- und alterungszyklischen Schwankungen der dielektrischen Eigenschaften isolierender Werkstoffe sowie die Vorgänge an deren Oberflächen würden eine reproduzierbare Messung nicht zulassen. Nach einer Weiterbildung der Erfindung wird deshalb zur Isolierung und Abschirmung der einen Elektrode gegen die andere Elektrode eine Guardbuchse verwendet. Weitere vorteilhafte Weiterbildungen ergeben sich aus den übrigen abhängigen Ansprüchen.

Ausführungsbeispiele werden nun anhand der Zeichnungen näher erläutert. Es zeigen:

Fig. 1 einen Schnitt durch einen Messkondensator,

Fig. 2 einen Schnitt durch einen Messkondensator nach einer Ausführungsvariante,

Fig. 3 eine schematische Darstellung eines erfindungsgemässen Messwertaufnehmers mit einem Leitungssystem und einer Messfühlerbeschaltung,

Fig. 4 ein elektrisches Ersatzschaltbild mit Guardbeschaltung, und

Fig. 5 ein elektrisches Ersatzschaltbild ohne Guardbeschaltung.

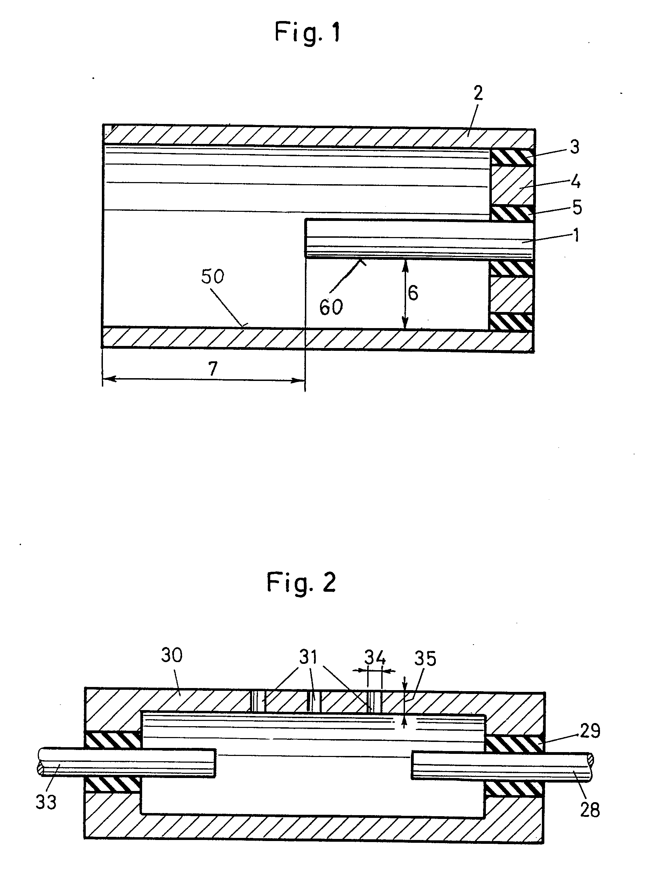

Die Fig. 1 zeigt einen einseitig offenen Messkondensator mit einer hülsenförmigen Aussenelektrode 2 und eine konzentrisch in dieser fest montierte Innenelektrode 1, wobei hier die elektrischen Anschlüsse der Elektroden nicht gezeigt sind. Um Streufelder abzuschirmen, überragt an der zur Messatmosphäre hin offenen Seite des Messkondensators, die Aussenhülse 2 die Innenelektrode 1 um den Bereich 7, der mindestens so lang ist wie der Abstand 6 zwischen den beiden Elektroden 1, 2.

Die beiden Elektroden 1 und 2 werden durch starke Feingoldschichten gebildet, die blanke und geringe Rauhtiefe aufweisende Oberflächen 60 und 50 besitzen. Die Elektroden 1, 2 sind somit vorzugsweise nicht passiviert, so dass parasitäre Effekte an den Oberflächen 60 und 50 möglichst weitgehend vermieden werden. Anstelle der Feingoldschichten können auch Schichten aus Platin, Rhodium oder aus einem anderen geeigneten Werkstoff vorgesehen sein. Eine Isolationsschicht auf den Elektroden 1 und 2 ist möglich, wenn diese sehr dünn ist und somit die parasitären Effekte an ihren Oberflächen klein sind.

Damit die originären, vom gasförmigen Dielektrikum verursachten Messeffekte an den Veränderungen des Dielektrikums des Messkondensators einen wesentlich grösseren Messeffekt ausüben als die Effekte an den Oberflächen der Elektroden, ist der Messkondensator so ausgebildet, dass je 0,5 mm² aktiver Oberfläche der Elektroden das Volumen des Dielektrikums mehr als 0,05 mm³ beträgt. Die aktive Oberfläche wird für diese Ueberlegung als das 2-fache der Oberfläche der Elektrode mit der kleineren Oberfläche, in diesem Fall also die Innenelektrode 1 mit der Oberfläche 60, angenommen.

Oberflächenstrukturen mit einer in einer Dimension geringeren Abmessung als 0,01 mm werden hierbei nicht berücksichtigt.

Nimmt man bei der in Fig. 1 dargestellten Anordnung für den zentrischen Bolzen 1 einen Durchmesser von 5 mm und für die Hülse 2 einen Innendurchmesser von 10 mm an, so ergibt sich bei einer Bolzenlänge 1 von 50 mm :

- für den Bolzen 1 eine geometrische Elektroden-Fläche von 785 mm² (1 x U: 50 x 15.7 mm)
- für die Hülse (im Bereich des Bolzens) eine Fläche von 1.570 mm² (50 x 31.4 mm)
- ein Feld-Volumen von 2943.75 mm³ (Kreisringfläche x 1)
- ein V/A-Verhältnis von 3.75 mm³/mm²

Da Rauhtiefen unter 0.01 mm nicht berücksichtigt werden, kann von der geometrischen Elektroden-Fläche ausgegangen werden.

Führt man bei ansonsten gleichen Verhältnissen die Hülse mit einem Innendurchmesser von 6 mm aus, so ergibt sich ein V/A-Verhältnis von 0.55 mm³/mm².

Die Fig. 2 zeigt eine Variante des Messkondensators. Dieser wird zwischen den Stirnseiten zweier axial angeordneten und bolzenförmigen Elektroden 28, 33 gebildet. Der Gasaustausch zur Messatmosphäre erfolgt durch Bohrungen 31 in einer Buchse 29, 30. Um Streufelder abzuschirmen genügt es, wenn das Verhältnis von Durchmesser 34 zur Tiefe 35 der Bohrungen 31 0,5 beträgt.

Zur Isolierung und Abschirmung der Elektroden 1, 2 bzw. 28, 33 gegeneinander, sind jeweils Guardbuchsen 3, 4, 5 bzw. 29, 30 vorgesehen. Bei der Ausführung nach Fig. 1 besteht die Guardbuchse aus einer radialen Abfolge einer inneren isolierenden Schicht 5, einer leitenden Schicht 4 und einer äusseren isolierenden Schicht 3. Vorzugsweise besteht diese Guardbuchse aus einer mit einer dünnen keramischen Schicht überzogenen Metallbuchse.

Um zu verhindern, dass sich z.B. durch Ablagerungen ein Streufeld stirnseitig über der Isolationsschicht an der Guardbuchse bildet, wird vorgeschlagen, die Isolationsschicht ringförmig zu unterbrechen, so dass kein Kriech pfad von der einen Elektrode zur anderen führt, ohne mit der leitenden mittleren Schicht der Guardbuchse verbunden zu sein.

Bei der Ausführung nach Fig. 2 ist die Guardbuchse entsprechend modifiziert und weist innere isolierende Schichten 29 und eine äussere leitende Schicht bzw. Buchse 30 auf.

Bei den mit der erfindungsgemässen Vorrichtung zu bestimmenden dielektrischen Eigenschaften handelt es sich um messtechnisch sehr kleine Effekte, die beispielsweise klein sind gegen die durch thermische Ausdehnung verursachten Veränderungen der Nullkapazität. Um trotzdem auch bei wechselnden Temperaturen reproduzierbar messen zu können, wird ein, hier nicht näher dargestellter, zweiter Messkondensator vorzugsweise mit den selben Werkstoffen und Massen wie der vorbeschriebene Messkondenator verwendet. Im Unterschied zum ersten Messkondensator ist dieser zweite zur Messatmosphäre hin nicht offen, sondern hermetisch verschlossen und mit einem Gasgemisch gefüllt, bei dem keine Komponente unter den Einsatzbedingungen des Messfühlers sich in wesentlichem Umfang an den Oberflächen ablagert. Diese Bedingung ist im Ausführungsbeispiel durch eine Füllung mit trockener Luft (Taupunkt unter -70° C) erfüllt.

Der zweite Messkondensator dient als Bezugsnullpunkt für die Messung. Er ist mit dem ersten Messkondensator thermisch kurzgeschlossen. Dies kann durch eine räumliche Anordnung eng nebeneinander sowie durch eine gemeinsame Hülse aus einem thermisch gut leitenden Werkstoff erreicht werden. Da sich beide Messkondensatoren thermisch annähernd gleich verhalten und durch die thermische Koppelung auch stets annähernd die gleiche Temperatur haben, sind die thermischen Fehler in erster Ordnung ausgeglichen.

Besonders vorteilhaft ist es, die beiden Messdensatoren als Halbbrücke zu beschalten, so dass bei einer Erregung mit einem symmetrischen Signal im Nullzustand (d.h. ohne Medium im offenen Messkondensator) das Summensignal gleich Null ist.

Um die im Signal der Messfelderregung enthaltenen Fehler zu kompensieren ist es bei hohen Anforderungen an die Genauigkeit vorteilhaft, durch Vergleichsbrücken zunächst ein Signal zu gewinnen, das die Fehler der Messfelderregung enthält, um diese Fehler dann im Mess-Signal zu kompensieren. Dies kann beispielsweise durch die Anordnung der Kondensatoren zu einer Vollbrücke geschehen.

Werden die Vergleichsbrücken räumlich eng bei den Messbrücken angeordnet, so können auch Fehler, die durch das Leitungssystem zwischen Messwertaufnehmer und Auswertungselektronik entstehen, ausgeglichen werden.

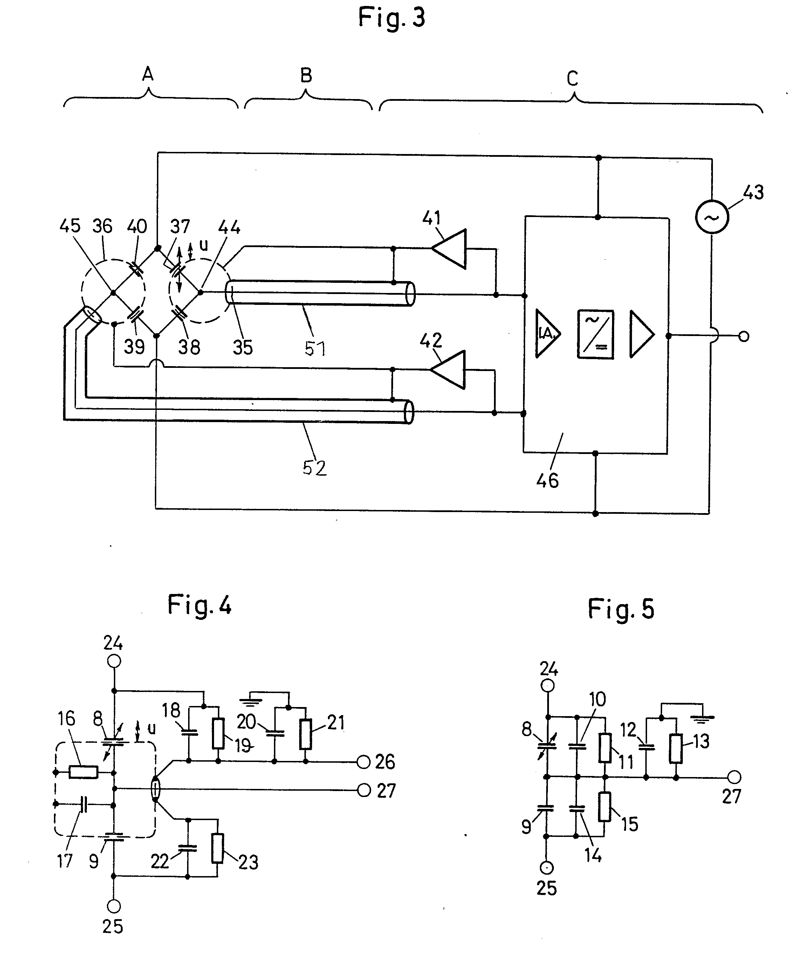

Eine vorzugsweise Fühlerbeschaltung wird nachfolgend anhand der Fig. 3 erläutert.

Der Messwertaufnehmer A in dieser Darstellung setzt sich aus den vorbeschriebenen Mess- 37, 38 und Vergleichsbrücken 39, 40 als Vollbrücke zusammen. Die durch die Guardbuchsen verwirklichten Abschirmungen 35, 36 sind als unterbrochene Linien eingezeichnet.

Ueber ein Leitungssystem B ist der Messwertaufnehmer A mit der Fühlerbeschaltung C verbunden. Dieses Leitungssystem muss in Anwendungen bei hohen Temperaturen, denen die Fühlerbeschaltung nicht ausgesetzt werden kann, grössere Entfernungen (im Bereich von Metern) überbrücken.

Werden die Guardbuchsen und Abschirmungen 51, 52 der Messleitungen an Masse gelegt, so bildet sich eine unter Umständen erhebliche Kapazität zwischen den Messelektroden und den Messleitungen einerseits und den Guardbuchsen und den Abschirmungen andererseits. Durch diese hohe (und zudem Schwankungen ausgesetzte) Kapazität wird das Signal an den Messelektroden verfälscht.

Ausserdem gelingt es in realen elektrischen Systemen nur unvollkommen, die auf die Abschirmung einwirkenden Signale über einen Masseanschluss abzuleiten.

In weiterer Ausgestaltung der Erfindung wird deshalb vorgeschlagen, das Potential der Abschirmung durch eine niederohmige Entsprechung des Mess-Signals zu bilden. Im Ausführungsbeispiel wird dies durch zwei in der Fühlerbeschaltung C eingangsseitig als Spannungsfolger geschaltete Operationsverstärker 41, 42 mit niederohmigem Ausgang erreicht, die die (sehr hochimpedanten) Eingangssignale der Mess- und der Vergleichsbrücke nachbilden und als Abschirmsignal für die Guardbuchsen zur Verfügung stellen.

Durch diese Anordnung besteht zwischen den Mess-Signalen und deren Abschirmung kein Potentialunterschied und mithin auch keine die Mess-Signale verfälschende Kapazität.

Die Erregung des Messwertaufnehmers geschieht symmetrisch durch einen hinsichtlich Symmetrie und Amplitudenkonstanz sehr präzisen Sinus-Generator 43. Die vom Generator 43 erzeugten symmetrischen Signale 24 und 25 erregen eine Anordnung mit einem Messkondensator 8 und einem zweiten Kondensator 9 Gestrichelt dargestellt ist die Abschirmung durch die Guardbuchse. Zwischen dem Mess-Signal 27 und dieser Guardbuchse wirken die parasitären Kapazitäten 17 und Widerstände 16, die durch die Isolationsschicht der Guardbuchse gebildet werden. Ebenfalls mit dem Guard-Signal wird die Abschirmung 26 des Mess-Signals 27 angesteuert. Bedingt durch die kontruktiven Verhältnisse wirken in der Regel über ohmische 19/23 und kapazitive 18/22 Pfade die Signale der Felderregung auf die Abschirmung 26 des MessSignals 27 ebenso ein wie andere Potentiale, z.B. die Erde der Anlage - kapazitiv 20 bzw. resistiv 21. Diese Signale werden durch die niederohmige Ansteuerung der Abschirmung abgeleitet. Da die Kapazitäten des Messwertaufnehmers alle annähernd gleich sind, sind die idealen Signale der Messbrücke 35, 37 und der Referenzbrücke 39, 40 im Nullzustand, d.h. ohne Medium im Messkondensator, gleich Null.

Nimmt die Kapazität des Messkondensators durch Eindiffundieren von Gas zu, so nimmt entsprechend die Amplitude des aus dem Erregungs-Signal abgeleiteten Mess-Signals 44 zu.

Eine Messfühlerbeschaltung 46 bildet über einen Instrumentenverstärker aus den beiden Brücken-Signalen ein Summensignal und verstärkt dessen Effektivwert. Das so gewonnene Spannungssignal verhält sich in dem für die Messung interessierenden Bereich ausreichend linear zum Wert der Kapazität des Messkondensators.

Besonders vorteilhaft ist es, die beiden Messkondensatoren als Halbbrücke zu schalten, so dass bei einer Erregung mit einem symmetrischen Signal im Nullzustand, d.h. ohne Medium im offenen Messkondensator, das Summensignal gleich Null ist. Im elektrischen Ersatzschaltbild gemäss Fig. 5 zeigen Kapazitäten 10, 12 und 14 sowie Widerstände 11, 13 und 15 die parasitären Effekte entlang den Oberflächen zwischen den Elektroden. Diese sind im absoluten Wert und in ihrer Variation grösser als die Messeffekte. Beim Ersatzschaltbild mit einer Isolierung und Abschirmung durch die Guardbuchse gemäss Fig. 4, wirken die parasitären, kapazitiven und resistiven Effekte nunmehr auf eine Abschirmung 26 und werden dort abgeleitet, so dass sie nur noch mit dem Potential der Abschirmung und dem nicht abgeleiteten Anteil der Störsignale über die kapazitive 17 und resistive 16 Koppelung der Guardbuchse mit der Messelektrode auf das Mess-Signal 27 einwirken. Wird die Abschirmung 26 an das Guardsignal angeschlossen, so sind die verbleibenden resistiven und kapazitiven Fehler in ihrem Wert nahezu gleich Null.

**Patentansprüche**

1. Kapazitiver Messwertaufnehmer zum Messen der Stoffkonzentrationsverhältnisse eines gasförmigen Mediums, mit einem offenen Messkondensator, dessen Dielektrikum durch das gasförmige Medium gebildet wird und der an den Eingang einer Auswertschaltung angekoppelt ist, dadurch gekennzeichnet, dass das Verhältnis des Volumens des Messkondensators zur Fläche der Elektrodenoberfläche mindestens 0,1 mm³/mm², vorzugsweise 0,5 bis 5,0 mm³/mm² beträgt, wobei Strukturen der Elektrodenoberflächen mit einer in einer Dimension geringeren Abmessung als 0,01 mm bei der Berechnung der Fläche nicht zu berücksichtigen sind und bei unterschiedlich grossen Elektroden (1, 2) die kleinere für diese Berechnung heranzuziehen ist und dass der Messkondensator durch blanke, insbesondere metallisch blanke oder mit einer Isolationsschicht überzogende Elektroden (1, 2) gebildet wird, wobei diese Isolationsschicht derart ausgebildet ist, dass sie lediglich einen vernachlässigbaren Beitrag zum Messignal liefert.

2. Messwertaufnehmer nach Anspruch 1, dadurch gekennzeichnet, dass die Elektroden (1, 2) mit einer Edelmetallschicht geschützt sind.

3. Messwertaufnehmer nach Anspruch 1 oder 2, dadurch gekennzeichnet, dass eine Aussenelektrode in der Form einer zylindrischen Hülse und eine Innenelektrode in der Form eines Bolzens vorgesehen sind, und dass die Aussenelektrode den Bolzen in der Länge um mindestens den Abstand zwischen Aussenelektrode und Innenelektrode überragt.

4. Messwertaufnehmer nach Anspruch 1 oder 2, dadurch gekennzeichnet, dass der Messkondensator durch zwei axiale Bolzen (28, 33) stirnseitig gebildet ist, wobei die Bolzen (28, 33) in einer Buchse (30) mit Bohrungen (31) fest gehalten sind.

5. Messwertaufnehmer nach einem der Ansprüche 1 bis 4, dadurch gekennzeichnet, dass die Elektroden (1, 2) durch eine zwischen diesen angeordnete Guardbuchse (3, 4, 5) voneinander isoliert und abgeschirmt sind.

6. Messwertaufnehmer nach Anspruch 5, dadurch gekennzeichnet, dass die Guardbuchse (3, 4, 5) eine mit einer dünnen keramischen Schicht überzogene Metallbuchse ist.

7. Messwertaufnehmer nach einem der Ansprüche 1 bis 6, dadurch gekennzeichnet, dass die Signale der Elektroden (1, 2) des Messkondensators ausserhalb des Volumens des Messkondensators so gegeneinander abgeschirmt sind, dass die wesentlichen Teile der ohmischen und kapazitiven Strompfade zwischen den Elektroden (1, 2) durch ein Potential abgeleitet werden, das entweder niederohmig mit dem Massepotential der Auswertungsschaltung verbunden ist oder eine niederohmige Nachbildung des an der Messelektrode anliegenden Signals darstellt.

8. Messwertaufnehmer nach einem der Ansprüche 1 bis 7, dadurch gekennzeichnet, dass ein zweiter Kondensator mit möglichst weitgehend gleichem thermischem Verhalten wie der Messkondensator in thermischer Koppelung mit dem Messkondensator betrieben wird, um die temperaturabhängigen Fehler des Messkondensators zu kompensieren.

9. Messwertaufnehmer nach Anspruch 8, dadurch gekennzeichnet, dass der zweite Kondensator mit dem Messkondensator zu einer Halbbrücke geschaltet und dass diese Brücke symmetrisch erregt wird.

10. Messwertaufnehmer nach Anspruch 9, dadurch gekennzeichnet, dass eine zweite kapazitive Halbbrücke aus zwei sich im thermischen Verhalten und kapazitiv möglichst weitgehend gleichen Kondensatoren gebildet wird, um die Fehler der symmetrischen Erregung der Messbrücke messen und kompensieren zu können.

11. Messwertaufnehmer nach Anspruch 9 oder 10, dadurch gekennzeichnet, dass die beiden Halbbrücken räumlich nebeneinander angeordnet und als Vollbrücke betrieben werden, um Fehler des Leitungssystems zwischen Messfühler und Fühlerbeschaltung auszugleichen.

12. Messwertaufnehmer nach einem oder mehreren der Ansprüche 1 bis 11, dadurch gekennzeichnet, dass der Messkondensator mit Frequenzen von 5 kHz bis 100 MHz erregt wird und die Amplitude und/oder die Phasenlage des Mess-Signals direkt als Messgrösse für die absolute Feuchte verwendet wird.

0294334

## Fig. 1

## Fig. 2

# Fig. 3

# Fig. 4

# Fig. 5

| Europäisches Patentamt | EUROPÄISCHER RECHERCHENBERICHT | Nummer der Anmeldung |
|---|---|---|
| | | EP 88 81 0349 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 778 706 (D. THOMPSON) * Figuren 1-3,8; Zusammenfassung; Ansprüche * | 1 | G 01 N 27/22 |
| A | | 9 | |
| A | DE-B-1 130 622 (GANN APPARATE- UND MASCHINENBAU- GmbH) * Ansprüche 1-4; Figur 1 * | 1,3 | |
| A | DE-A-3 307 588 (L'OREAL PARIS) * Zusammenfassung; Figur 2; Anspruch 1 * | 1,3 | |
| A | DE-A-3 619 558 (J. FLUKE Mfg. CO.) * Zusammenfassung; Anspruch 1; Figuren 1-5 * | 8 | |
| A | DE-A-2 120 744 (CHEVRON RESEARCH CO.) * Ansprüche 1,2 * | 1,12 | |
| A | DE-A-2 730 072 (JOHNSON CONTROLS INC.) * Ansprüche * | 1 | RECHERCHIERTE SACHGEBIETE (Int. Cl.4) |
| D,A | DE-B-1 698 096 (PANAMETRICS) * Ansprüche; Figuren * | 1 | G 01 N |
| D,A | DE-B-2 365 826 (VAISALA OY) * Ansprüche; Figuren * | 1 | |

Der vorliegende Recherchenbericht wurde für alle Patentansprüche erstellt

| Recherchenort | Abschlußdatum der Recherche | Prüfer |
|---|---|---|
| DEN HAAG | 24-08-1988 | BAROCCI S. |